(19) Europäisches Patentamt

European Patent Office

Office européen des brevets

(11) **EP 0 632 356 B1**

(12) **EUROPÄISCHE PATENTSCHRIFT**

(45) Veröffentlichungstag und Bekanntmachung des Hinweises auf die Patenterteilung:
**05.11.1997 Patentblatt 1997/45**

(51) Int Cl.6: **G05D 23/20**, F24D 19/10

(21) Anmeldenummer: **94110170.1**

(22) Anmeldetag: **30.06.1994**

(54) **Verfahren zur selbsttätigen Heizkurvenoptimierung**

Method for the automatic optimizing of a heating curve

Procédé pour l'optimisation automatique de la courbe de chauffage

(84) Benannte Vertragsstaaten:
**CH DE FR GB LI**

(30) Priorität: **03.07.1993 EP 93110642**
**06.09.1993 DE 4330063**
**04.03.1994 DE 4407273**

(43) Veröffentlichungstag der Anmeldung:
**04.01.1995 Patentblatt 1995/01**

(73) Patentinhaber: **HONEYWELL AG**
**63067 Offenbach (DE)**

(72) Erfinder: **Raufenbarth, Franz, Dipl.-Phys.**
**D-71101 Schönaich (DE)**

(74) Vertreter: **Herzbach, Dieter, Dipl.-Ing. et al**
**Honeywell Holding AG**
**Patent- und Lizenzabteilung**
**Postfach 10 08 65**
**63008 Offenbach (DE)**

(56) Entgegenhaltungen:
**DE-A- 3 328 188        DE-A- 3 537 104**

**Beschreibung**

Die vorliegende Erfindung bezieht sich auf ein Verfahren nach dem Gattungsbegriff der unabhängigen Ansprüche.

Bei der vorliegenden Erfindung wird ausgegangen von der bekannten Beziehung zwischen der Heizungsvorlauftemperatur, der Außentemperatur, der Raumtemperatur und den Nennwerten der drei genannten Größen für den jeweiligen Auslegungsfall der Heizungsanlage sowie von den bekannten, für die Heizkurvenkrümmung verantwortlichen Werten m. Dabei ergibt sich folgende bekannte Beziehung:

$$\vartheta_v - \vartheta_z = \frac{\vartheta_z - \vartheta_a}{\vartheta_{zn} - \vartheta_{an}} \cdot \frac{\vartheta_{vn} - \vartheta_m}{1 - \left(\frac{\vartheta_{vn} - \vartheta_{zn}}{\vartheta_m - \vartheta_{zn}}\right) - \left[\left(\frac{\vartheta_z - \vartheta_a}{\vartheta_{zn} - \vartheta_{an}}\right)\frac{m-1}{m}\right]} \qquad (1)$$

wobei:

$\vartheta_z =$     Raumtemperatur
$\vartheta_a =$     Außentemperatur
$\vartheta_v =$     Heizungsvorlauftemperatur
$\vartheta_r =$     Rücklauftemperatur
$m =$     für den Heizkörper charakteristische Exponentialfaktor
$n =$     Index für die Nenngrößen der Heizungsanlage im Auslegungsfall.

Wenn in der Beziehung gemäß Gleichung (1) folgende Substitutionen durchgeführt werden:

$$\vartheta_v - \vartheta_z = y; \ \vartheta_{vn} - \vartheta_{zn} = y_n$$

$$\vartheta_z - \vartheta_a \ x; \ \vartheta_{zn} - \vartheta_{an} = x_n$$

dann läßt sich die Gleichung (1) wie folgt schreiben:

$$y = \frac{x}{x_n} \cdot \frac{\vartheta_{vn} - \vartheta_m}{1 - \left(\frac{Y_n}{\vartheta_m - \vartheta_{zn}}\right) - \left[\left(\frac{x}{x_n}\right)\frac{m-1}{m}\right]} \qquad (2)$$

In dieser Gleichung (2) ist x die einzige Variable des Nenners, solange gilt: m = constant, was insofern praktisch stets der Fall ist als m durch die Art der verwendeten Heizkörper und dergleichen des betreffenden Heizkreises bestimmt wird.

Mit Gleichung (2) lassen sich folglich alle Heizkurven für die jeweilige Auslegung der Heizungsanlage bzw. des betreffenden Heizkreises darstellen. Diese mathematische Beziehung ist jedoch so komplex, daß ihre Realisierung auch bei Einsatz eines Mikroprozessors, insbesondere wegen des relativ hohen Bedarfs an Speicherplätzen und Rechenzeit zu aufwendig würde.

Gemäß der DE-PS 33 00 082 werden eine Mehrzahl von Heizkurven nach Gleichung (2) für vorbestimmte Werte $x_n$, $\vartheta_{vn}$, $\vartheta_{rn}$, $\vartheta_{an}$, m durch folgende Beziehung dargestellt:

$$Y_i = S \cdot f_i(x) \qquad (3),$$

wobei $f_i$ so bestimmt wird, daß die Gleichung (2) im vorliegenden Außentemperaturbereich jeweils mit guter Näherung erfüllt wird, was am einfachsten durch Annäherung mittels Polynomen erfolgen kann. Der Index i(i = 1,2...n) definiert die unterschiedlichen Heizkurven des Heizkurvenbüschels, und S ist die Steigung der Heizkurven während die Funktion

$f_i(x)$ die Krümmungsfunktion der normierten Heizkurve darstellt.

Bei diesem bekannten Verfahren erfolgt entweder eine Veränderung der Steigung oder der Krümmung der Heizkurve.

Sehr viel schneller konvergiert das Verfahren gemäß der DE-PS 32 10 428, bei dem die Heizkurve durch eine Heizkurvengleichung der Form:

$$y = \sum_{j=1}^{M} k_j \cdot x^{\alpha_j} \tag{4}.$$

vorgegeben wird, wobei aus mehreren zu unterschiedlichen Zeitpunkten vorliegenden Momentanwerten von $\vartheta_a$, $\vartheta_v$, and $\vartheta_z$ der wenigstens eine Parameter k durch ein statistisches Ausgleichsverfahren berechnet wird. Der bzw. die Exponent(en)$\alpha_j$ wird (werden) im bekannten Fall als Konstante(n) vorgegeben.

Ausgehend hiervon ist es die Aufgabe der vorliegenden Erfindung, das bekannte Verfahren so zu verbessern, daß auch ohne die Anwendung eines statistischen Ausgleichsverfahrens die Optimierung der Heizkurve sehr schnell konvergiert.

Die Lösung dieser Aufgabe gelingt gemäß den kennzeichnenden Merkmalen des Patentanspruches 1.

Diese Erfindung geht von der Tatsache aus, daß bei einer gewünschten Raumtemperatur von z.B. $\vartheta_z = 20°C$ und bei einer Außentemperatur von beispielsweise $\vartheta_a = 20°C$ die Vorlauftemperatur $\vartheta_v$ des Heizmittels ebenfalls 20°C betragen muß. Dies bedeutet, daß die Heizkurve durch den Ursprung des Koordinatenkreuzes verläuft. Aufgrund von externen Energiequellen wie z.B. Sonnen- oder Windeinfluß kann die Heizkurve tatsächlich in der einen oder der anderen Richtung verschoben sein. In diesem Zusammenhang ist es beispielsweise bekannt, einen Sonnenfühler vorzusehen und dessen Signal auf den witterungsgeführten Vorlauftemperaturregler aufzuschalten. Der Einfluß der Sonnenenergie läßt sich durch einen Serviceeingriff am Bediengerät berücksichtigen. In ähnlicher Weise aber mit umgekehrtem Vorzeichen läßt sich ein Windeinfluß berücksichtigen. Verfahren, die eine derartige Fremdenergie ohne die Anordnung spezieller Fühler berücksichtigen können, sind bislang nicht bekannt.

Es ist daher eine weitere Aufgabe der vorliegenden Erfindung, das eingangs genannte Verfahren so auszugestalten, daß auch die ein Gebäude beeinflussende Fremdenergie bei der Heizkurvenoptimierung Berücksichtigung findet.

Eine Lösung dieser Aufgabe gelingt gemäß den kennzeichnenden Merkmalen des unabhängigen Anspruches 2. Weitere vorteilhafte Ausgestaltungen der erfindungsgemäßen Verfahren können den abhängigen Ansprüchen entnommen werden.

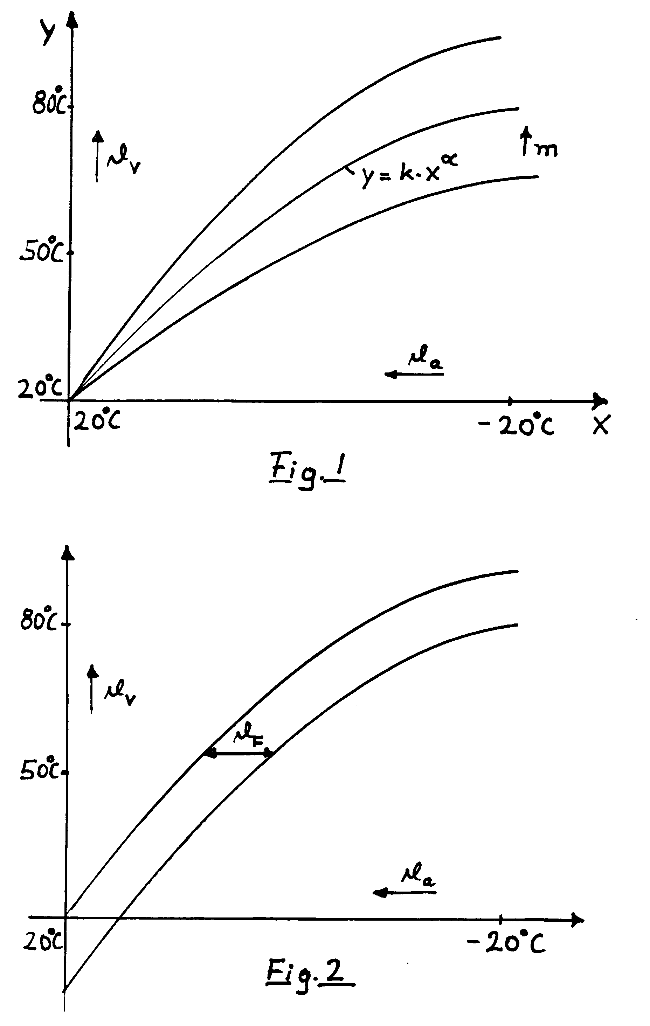

Die erfindungsgemäßen Verfahren sollen nunmehr anhand der beigeschlossenen Figuren erläutert werden. In Figur 1 ist der Wert y oder die Vorlauftemperatur $\vartheta_v$ als eine Funktion des Wertes x oder der Außentemperatur $\vartheta_a$ entsprechend aufgetragen, während Figur 2 die Temperaturverschiebung $\vartheta_F$ zeigt, die die gleiche Heizkurve aufgrund von Fremdenergie erfährt. Hierbei liegt es auf der Hand, daß beispielsweise durch Sonneneinstrahlung die Heizkurve eine Verschiebung nach unten erfährt, während durch Windeinflüsse eine Verschiebung nach oben bewirkt wird. Andere innerhalb eines Gebäudes vorhandene Fremdenergiequellen finden in gleicher Weise bei der Heizkurvenoptimierung Berücksichtigung.

Für unterschiedliche Heizkörperexponenten m ergeben sich unterschiedliche Heizkurvenverläufe gemäß einer Potenzfunktion. Jede dieser Kurven läßt sich durch die Potenzfunktion:

$$y = k \cdot x^{\alpha} \tag{5}$$

beschreiben.

In dieser Potenzfunktion lassen sich in bekannter Weise der Koeffizient k und der Exponent $\alpha$ nach folgenden Ausdrücken berechnen:

$$\alpha = \frac{\Sigma(\ln x_i)(\ln y_i) - \dfrac{(\Sigma \ln x_i)(\Sigma \ln y_i)}{n}}{\Sigma(\ln x_i)^2 - \dfrac{(\Sigma \ln x_i)^2}{n}} \tag{6}$$

$$k = \exp\left[\frac{\Sigma \ln y_i}{n} - \alpha \frac{\Sigma \ln x_i}{n}\right] \tag{7}.$$

Berechnet man $\alpha$ und k für zwei Meßwerte $x_1$, $x_2$ und $y_1$, $y_2$, d.h. bricht man die Reihenentwicklung jeweils nach dem zweiten Glied ab, so erhält man:

$$\alpha = \frac{\ln \dfrac{y_1}{y_2}}{\ln \dfrac{x_1}{x_2}} \tag{8}$$

und

$$k = \sqrt{\frac{y_1 \cdot y_2}{(x_1 \cdot x_2)}\alpha} \tag{9}.$$

Zu dem gleichen Ergebnis gelangt man durch Aufstellung von zwei Gleichungen entsprechend der Gleichung (5):

$$y_1 = k \cdot x_1{}^{\alpha}$$

$$y_2 = k \cdot x_2{}^{\alpha}$$

Logarithmieren beider Gleichungen:

$$\ln y_1 = \ln k + \alpha \ln x_1$$

$$\ln y_2 = \ln k + \alpha \ln x_2$$

Subtraktion beider Gleichungen:

$$\ln y_1 - \ln y_2 = \alpha \ln x_1 - \alpha \ln x_2$$

$$\ln \frac{y_1}{y_2} = \alpha (\ln \frac{x_1}{x_2})$$

$$\alpha = \frac{\ln \dfrac{y_1}{y_2}}{\ln \dfrac{x_1}{x_2}} \tag{8'}$$

Dementsprechend folgt aus den Ausgangsgleichungen:

$$k = \frac{y_1}{x_1{}^{\alpha}} \qquad , \text{bzw.,} \qquad k = \frac{y_2}{x_2{}^{\alpha}} \qquad ,$$

bzw. Gleichung (9) durch Bildung des geometrischen Mittels der beiden letzten Ausdrücke.

Berechnet man k und $\alpha$ aus Meßwerttripeln $\vartheta_z$, $\vartheta_a$ und $\vartheta_v$, die in mittleren winterlichen Außentemperaturbereichen liegen und mittelt man die erhaltenen Koeffizienten k und Exponenten $\alpha$, so erhält man in einfacher Weise mit geringem Rechenaufwand eine optimierte Heizkurve entsprechend der in Gleichung (5) angegebenen Potenzfunktion.

Der Optimierungsvorgang beginnt jeweils mit einer Startheizkurve. Auch wenn diese weit abseits liegt, hat sich gezeigt, daß immer die richtige Heizkurve mit Sicherheit ermittelt wird. Um die Rechnung nicht unnötig zu belasten, können Werte von $\alpha$, die kleiner als 0,6 sind, unberücksichtigt bleiben.

In den zuvor angegebenen Gleichungen war es erforderlich, bestimmte Werte zu logarithmieren, um den Wert des Exponenten $\alpha$ zu berechnen. Diese Logarithmierung kann in folgender Weise vermieden werden:

Die Potenzfunktion (5), die die Heizkurvengleichung annähert, wird differenziert:

$$y' = \alpha \cdot k \cdot x^{\alpha-1} \tag{10}.$$

Nun wird das Verhältnis gebildet:

$$\frac{y}{y'} = \frac{k \cdot x^{\alpha}}{\alpha \cdot k \cdot x^{\alpha-1}} = \frac{x}{\alpha} \tag{11}$$

oder

$$\alpha = x \cdot \frac{y'}{y}$$

Setzt man in Gleichung (11) für:

$$y' = \frac{dy}{dx} \approx \frac{\Delta y}{\Delta x} = \frac{y_1 - y_2}{x_1 - x_2}$$

und für x und y das arithmetische Mittel ein:

$$x = \frac{x_1 + x_2}{2} \qquad , \qquad y = \frac{y_1 + y_2}{2} \qquad ,$$

so erhält man:

$$\alpha = \frac{x_1 + x_2}{x_1 - x_2} \cdot \frac{y_1 - y_2}{y_1 + y_2} \tag{12}$$

und

$$k = \frac{y_1 + y_2}{2(\frac{x_1 + x_2}{2})^{\alpha}} \tag{13}.$$

Durch Einsetzen zweier Meßwerttripel $x_1$, $x_2$ und $y_1$, $y_2$ kann man zeigen, daß die Gleichungen (12) und (13) eine sehr gute Annäherung an die zuvor angegebenen exakten Gleichungen (8) und (9) darstellen. Die Meßwertdifferenzen $x_1 = \vartheta_{z1} - \vartheta_{a1}$ und $x_2 = \vartheta_{z2} - \vartheta_{a2}$ sollten dabei vorzugsweise weniger als 5K auseinanderliegen. Vorzugsweise sollten die Messungen bei Außentemperaturen gemacht werden, die unter <10°C liegen. Durch wiederholte Erfassung von Meßwerttripeln und Mittelung der damit erzielten Ergebnisse für k und $\alpha$ kann die Genauigkeit des Verfahrens erhöht werden.

Gemäß dem weiteren Ausführungsbeispiel der vorliegenden Erfindung wird die Heizkurvengleichung durch fol-

gende Näherungsfunktion vorgegeben:

$$y = k(x \mp \vartheta_F)^{\alpha} \qquad (14),$$

wobei in bekannter Weise

$y = \vartheta_v - \vartheta_z$ und
$x = \vartheta_z - \vartheta_a$

mit

$\vartheta_v$ = Vorlauftemperatur
$\vartheta_z$ = Raumtemperatur, und
$\vartheta_a$ = = Außentemperatur,

wobei $\vartheta_F$ die durch Fremdenergie (positiv oder negativ) erzeugte Temperaturverschiebung repräsentiert. In den nachfolgenden Gleichungen wird davon ausgegangen, daß eine positive Fremdenergie vorliegt, so daß das Minuszeichen vor $\vartheta_F$ in Gleichung (14) Gültigkeit hat.

Duch Differentiation der vorstehend aufgeführten Gleichung nach x erhält man:

$$y' = \frac{dy}{dx} = \alpha \cdot k(x - \vartheta_F)^{\alpha - 1}$$

Dividiert man beide vorangehenden Gleichungen, so erhält man:

$$\frac{y}{y'} = \frac{x - \vartheta_F}{\alpha}$$

oder

$$\alpha \frac{y}{y'} + \vartheta_F = x \qquad (15).$$

Die Gleichung (15) ist eine lineare Gleichung in $\alpha$ und $\vartheta_F$.
Nun wird gesetzt:

$$y = \frac{y_1 + y_2}{2}; \; x = \frac{x_1 + x_2}{2}; \; y' = \frac{y_2 - y_1}{x_2 - x_1}$$

In Gleichung (15) eingesetzt, erhält man:

$$\alpha \cdot \frac{y_1 + y_2}{y_2 - y_1} \cdot (x_2 - x_1) + 2\vartheta_F = x_1 + x_2$$

Auch dies ist eine lineare Gleichung in $\alpha$ und $\vartheta_F$. Durch Einführung eines weiteren Meßpunktepaares $x_3$, $y_3$ erhält man sodann zwei Gleichungen für die Ermittlung von $\alpha$ und $\vartheta_F$:

$$\frac{y_1 + y_2}{y_2 - y_1} \cdot (x_2 - x_1)\alpha + 2\vartheta_F = x_1 + x_2$$

(16)

$$\frac{y_2 + y_3}{y_3 - y_2} \cdot (x_3 - x_2)\alpha + 2\vartheta_F = x_2 + x_3$$

Ein weiteres Gleichungspaar könnte folgendermaßen vorgegeben sein:

$$\frac{y_2 + y_3}{y_3 - y_2} \cdot (x_3 - x_2)\alpha + 2\vartheta_F = x_2 + x_3$$

(17)

$$\frac{y_3 + y_4}{y_4 - y_3} \cdot (x_4 - x_3)\alpha + 2\vartheta_F = x_3 + x_4$$

Nimmt man folgende Substitutionen vor:

$$a_{11} = \frac{y_n + y_{n+1}}{y_{n+1} - y_n} \quad (x_{n+1}-x_n) \qquad a_{12} = 2 \qquad b_1 = x_n + x_{n+1}$$

$$a_{21} = \frac{y_{n+1} + y_{n+2}}{y_{n+2} - y_{n+1}} \quad (x_{n+2}-x_{n+1}) \qquad a_{22} = 2 \qquad b_2 = x_{n+1} + x_{n+2}$$

So folgt:

(18)

$$\alpha_n = \frac{\begin{vmatrix} b1 & a12 \\ b2 & a22 \end{vmatrix}}{\begin{vmatrix} a11 & a12 \\ a21 & a22 \end{vmatrix}}$$

(19)

$$\vartheta_{Fn} = \frac{\begin{vmatrix} a11 & b1 \\ a21 & b2 \end{vmatrix}}{\begin{vmatrix} a11 & a12 \\ a21 & a22 \end{vmatrix}}$$

Durch Mittelwertbildung möglichst vieler $\alpha_n$ und $\vartheta_{Fn}$ ergibt sich sodann:

$$\bar{a} = \frac{1}{n}\sum_n \alpha_n$$

(20)

$$\overline{\vartheta}_F = \frac{1}{n} \sum_n \vartheta_{Fn} \qquad\qquad (21).$$

Aus der Gleichung (14) ergibt sich sodann k wie folgt:

$$\overline{k} = \sqrt[n]{\frac{y_1 \cdot y_2 \cdot \ldots y_n}{\left[(x_1 - \vartheta_F)(x_2 - \vartheta_F)\ldots(x_n - \vartheta_F)\right]^\alpha}}$$

**oder**

$$\overline{\ln k} = \frac{1}{n}\left[\sum_n \ln y_n - \sum_n \ln(x_n - \vartheta_F)\right] \qquad\qquad (22).$$

Neben diesem Rechenbeispiel zur Ermittlung von k, $\alpha$ und $\vartheta_F$ gibt es weitere Möglichkeiten zur Berechnung dieser Größen aus verschiedenen Meßwerttripeln $\vartheta_v$, $\vartheta_z$ und $\vartheta_a$, d.h. aus verschiedenen $y_n$ und $x_n$. Die Abstände der Messungen können dabei durchaus beträchtlich verschieden sein.

Zusammenfassend ist festzustellen, daß gemäß der vorliegenden Erfindung die Heizkurvengleichung durch eine Exponentialfunktion mit drei Parametern k, $\alpha$ und $\vartheta_F$ angenähert wird und daß durch einfache lineare Gleichungen in $\alpha$ und $\vartheta_F$ alle Parameter in einfacher Weise berechnet werden können.

**Patentansprüche**

1. Verfahren zur selbsttätigen Optimierung der Heizkurve eines Heizungsreglers in einer Heizungsanlage eines Gebäudes, bei welchem die Außentemperatur $\vartheta_a$, die Heizungsvorlauftemperatur $\vartheta_v$ oder eine andere, die potentielle Heizleistung im Heizungskreis repräsentierende Größe des Heizmittels und die Raumtemperatur $\vartheta_z$ eines durch den Heizungskreis beheizten Raumes oder ein Mittelwert der Raumtemperaturen mehrerer beheizter Räume des beheizten Gebäudes gemessen werden und der Heizungsregler die Heizungsvorlauftemperatur $\vartheta_v$ in Abhängigkeit von der Außentemperatur $\vartheta_a$ und dem Raumtemperatursollwert gemäß der Heizkurve führt und wobei die Heizkurve durch eine Heizkurvengleichung der Form $y = k \cdot x^\alpha$ mit $y = \vartheta_v - \vartheta_z$ und $x = \vartheta_z - \vartheta_a$ angenähert wird, **dadurch gekennzeichnet**, daß in der Heizkurvengleichung sowohl der Koeffizient k als auch der Exponent $\alpha$ rechnerisch aus Meßwerttripeln $\vartheta_a$, $\vartheta_v$, $\vartheta_z$ bestimmt werden.

2. Verfahren zur selbsttätigen Optimierung der Heizkurve eines Heizungsreglers in einer Heizungsanlage eines Gebäudes, bei welchem die Außentemperatur $\vartheta_a$, die Heizungsvorlauftemperatur $\vartheta_v$ oder eine andere, die potentielle Heizleistung im Heizungskreis repräsentierende Größe des Heizmittels und die Raumtemperatur $\vartheta_z$ eines durch den Heizungskreis beheizten Raumes oder ein Mittelwert der Raumtemperaturen mehrerer beheizter Räume des beheizten Gebäudes gemessen werden und der Heizungsregler die Heizungsvorlauftemperatur $\vartheta_v$ in Abhängigkeit von der Außentemperatur $\vartheta_a$ und dem Raumtemperatur-Sollwert gemäß der Heizkurve führt und wobei die Heizkurve durch eine Heizkurvengleichung der Form $y = k \cdot x^\alpha$ angenähert wird, wobei y durch die Differenz zwischen der Vorlauftemperatur $\vartheta_v$ und der Raumtemperatur $\vartheta_z$ vorgegeben ist und x die Differenz zwischen der Raumtemperatur $\vartheta_z$ und der Außentemperatur $\vartheta_a$ enthält, **dadurch gekennzeichnet,** daß in der Heizkurvengleichung sowohl der Koeffizient k als auch der Exponent $\alpha$ rechnerisch aus Meßwerttripeln $\vartheta_a$, $\vartheta_v$, $\vartheta_z$ bestimmt werden und daß die Größe x ferner eine durch Fremdenergie hervorgerufene Temperaturverschiebung $\vartheta_F$ gemäß folgender Beziehung:

$$x' = \vartheta_z - \vartheta_a \mp \vartheta_F$$

enthält.

3. Verfahren nach Anspruch 2, **dadurch gekennzeichnet**, daß die Größen $\alpha$, $\vartheta_F$ und k aus folgenden Gleichungen ermittelt werden:

$$\frac{y_n + y_{n+1}}{y_n - y_{n+1}}(x_n - x_{n+1})\alpha + 2\vartheta_F = x_n + x_{n+1}$$

$$\overline{\ln K} = \frac{1}{n}\left[\sum_n \ln y_n - \alpha\sum_n \ln(x_n - \vartheta_F)\right],$$

wobei n = 1, 2, ..., d.h. Messungen zu verschiedenen Zeitpunkten sind.

4. Verfahren nach Anspruch 1, **dadurch gekennzeichnet**, daß sowohl der Koeffizient k als auch der Exponent $\alpha$ aus mehreren Meßwerttripeln $\vartheta_a$, $\vartheta_v$, $\vartheta_z$ mehrfach bestimmt und anschließend gemittelt wird.

5. Verfahren nach Anspruch 1 und 4, **dadurch gekennzeichnet**, daß der Exponent $\alpha$ gemäß folgender Beziehung berechnet wird:

$$\alpha = \frac{\ln \frac{y_1}{y_2}}{\ln \frac{x_1}{x_2}}$$

und der Koeffizient k gemäß folgender Beziehung berechnet wird:

$$k = \sqrt{\frac{y_1 \cdot y_2}{(x_1 \cdot x_2)^\alpha}},$$

wobei $x_1$, $y_1$ und $x_2$, $y_2$ durch zwei Meßwerttripel $\vartheta_a$, $\vartheta_v$, $\vartheta_z$ vorgegeben sind.

6. Verfahren nach Anspruch 4, **dadurch gekennzeichnet**, daß Werte von $\alpha < 0{,}6$ nicht berücksichtigt werden.

7. Verfahren nach Anspruch 1, **dadurch gekennzeichnet**, daß der Exponent $\alpha$ gemäß folgender Beziehung berechnet wird:

$$\alpha = \frac{x_1 + x_2}{x_1 - x_2} \cdot \frac{y_1 - y_2}{y_1 + y_2}$$

und der Koeffizient k gemäß folgender Beziehung berechnet wird:

$$k = \frac{y_1 + y_2}{2(\frac{x_1 + x_2}{2})^\alpha}$$

wobei $x_1$, $y_1$ und $x_2$, $y_2$ durch zwei Meßwerttripel vorgegeben sind.

8. Verfahren nach Anspruch 7, **dadurch gekennzeichnet,** daß die Meßwertdifferenzen zwischen $x_1$, $x_2$ nicht mehr als 5 K auseinanderliegen.

## Claims

1. A method for the automatic optimization of the heating curve of a heating controller in a heating plant of a building, at which the outdoor temperature $\vartheta_a$, the heater supply fluid temperature $\vartheta_v$ or another value of the supply fluid representing the potential heating capability within the heating circuit and the room temperature $\vartheta_z$ of a room heated by the heating circuit or an average value of the room temperatures of a plurality of heated rooms of the heated building are measured, and the heating controller is guiding the heater supply fluid temperature $\vartheta_v$ as a function of the outdoor temperature $\vartheta_a$ and the set value of the room temperature according to the heating curve, and whereat the heating curve is approximated by means of a heating curve equation of the form $y = k \cdot x^\alpha$, where $y = \vartheta_v - \vartheta_z$ and $x = \vartheta_z - \vartheta_a$, **characterized in that** within the heating curve equation the coefficient k as well as the exponent $\alpha$ are determined by computation from measured value triples $\vartheta_a$, $\vartheta_v$, $\vartheta_z$.

2. Method for the automatic optimization of the heating curve of a heating controller in a heating plant of a building, at which the outdoor temperature $\vartheta_a$, the heater supply fluid temperature $\vartheta_v$ or another value of the supply fluid representing the potential heating capability within the heating circuit and the room temperature $\vartheta_z$ of a room heated by the heating circuit or an average value of the room temperatures of a plurality of heated rooms of the heated building are measured, and the heating controller is guiding the heater supply fluid temperature $\vartheta_v$ as a function of the outside temperature $\vartheta_a$ and the set value of the room temperature according to the heating curve, and whereat the heating curve is approximated by means of a heating curve equation of the form $y = k \cdot x^\alpha$, whereat y is represented by the difference between $\vartheta_v$ and $\vartheta_z$, and x is containing the difference between $\vartheta_z$ and $\vartheta_a$, **characterized in that** within the heating curve equation the coefficient k as well as the exponent a are determined by computation from measured value triples $\vartheta_a$, $\vartheta_v$, $\vartheta_z$ and that the value x additionally contains a temperature offset $\vartheta_F$ produced by external energy according to the following relationship:

$$x' = \vartheta_z - \vartheta_a \mp \vartheta_F .$$

3. Method according to claim 2, **characterized in that** the values $\alpha$, $\vartheta_F$ and k are determined from the following equations:

$$\frac{y_n + y_{n+1}}{y_n - y_{n+1}}(x_n - x_{n+1})\alpha + 2\vartheta_F = x_n + x_{n+1}$$

$$\overline{\ln K} = \frac{1}{n}\left[\sum_n \ln y_n - \alpha \sum_n \ln(x_n - \vartheta_F)\right],$$

whereat n = 1, 2, 3 ..., i.e. measurements at different points of time.

4. Method according to claim 1, **characterized in that** the coefficient k as well as the exponent $\alpha$ are repeatedly determined from a plurality of measured value triples $\vartheta_a$, $\vartheta_v$, $\vartheta_z$ and subsequently are averaged.

5. Method according claim 1 and 4, **characterized in that** the exponent $\alpha$ is calculated according to the following relationship:

$$\alpha = \frac{\ln \dfrac{y_1}{y_2}}{\ln \dfrac{x_1}{x_2}}$$

and the coefficient k is calculated according to the following relationship:

$$k = \sqrt{\frac{y_1 \cdot y_2}{(x_1 \cdot x_2)^\alpha}},$$

whereat $x_1$, $y_1$ and $x_2$, $y_2$ are provided by two measured value triples $\vartheta_a$, $\vartheta_v$, $\vartheta_z$.

6. Method according to claim 4, **characterized in that** values of $\alpha < 0,6$ are not taken into account.

7. Method according to claim 1, **characterized in that** the exponent $\alpha$ is calculated according to the following relationship:

$$\alpha = \frac{x_1 + x_2}{x_1 - x_2} \cdot \frac{y_1 - y_2}{y_1 + y_2}$$

and the coefficient k is calculated according to the following relationship:

$$k = \frac{y_1 + y_2}{2(\frac{x_1 + x_2}{2})^\alpha}$$

whereat $x_1$, $y_1$ and $x_2$, $y_2$ are provided by two measured value triples.

8. Method according to claim 7, **characterized in that** t the measured value differences between $x_1$, $x_2$ are not offset by more than 5 K.

## Revendications

1. Procédé pour l'optimisation automatique de la courbe de chauffage d'un régulateur de chauffage dans une installation de chauffage d'un bâtiment, selon lequel la température extérieure $\vartheta_a$, la température aller de chauffage $\vartheta_v$ ou une autre grandeur du fluide de chauffage, représentant de la puissance de chauffage potentielle dans le circuit de chauffage, et la température ambiante $\vartheta_z$ d'une pièce chauffée par le circuit de chauffage ou une valeur moyenne des températures ambiantes de plusieurs pièces chauffées du bâtiment chauffé sont mesurées et le régulateur de chauffage pilote la température aller de chauffage $\vartheta_v$ en fonction de la température extérieure $\vartheta_a$ et de la valeur de consigne de la température ambiante conformément à la courbe de chauffage, la courbe de chauffage étant approximée par une équation de courbe de chauffage ayant la forme $y = k. x^\alpha$ avec $y = \vartheta_v - \vartheta_z$ et $x = \vartheta_z - \vartheta_a$, caractérisé en ce que dans l'équation de courbe de chauffage, aussi bien le coefficient k que l'exposant $\alpha$ sont déterminés par calcul à partir de triplets de valeurs de mesure $\vartheta_a$, $\vartheta_v$, $\vartheta_z$.

2. Procédé pour l'optimisation automatique de la courbe de chauffage d'un régulateur de chauffage dans une installation de chauffage d'un bâtiment, selon lequel la température extérieure $\vartheta_a$, la température aller de chauffage $\vartheta_v$ ou une autre grandeur du fluide de chauffage, représentative de la puissance de chauffage potentielle dans le circuit de chauffage, et la température ambiante $\vartheta_z$ d'une pièce chauffée par le circuit de chauffage ou une valeur moyenne des températures ambiantes de plusieurs pièces chauffées du bâtiment chauffé sont mesurées et le régulateur de chauffage pilote la température aller de chauffage $\vartheta_v$ en fonction de la température extérieure $\vartheta_a$ et de la valeur de consigne de la température ambiante conformément à la courbe de chauffage, la courbe de chauffage étant approximée par une équation de courbe de chauffage ayant la forme $y = k. x^\alpha$, y étant prédéterminé par la différence entre la température aller $\vartheta_v$ et la température $\vartheta_z$ de la pièce et x incluant la différence entre la température $\vartheta_z$ de la pièce et la température extérieure $\vartheta_a$, caractérisé en ce que dans l'équation de courbe de chauffage, aussi bien le coefficient k que l'exposant $\alpha$ sont déterminés par calcul à partir de triplets de valeurs de mesure $\vartheta_a$, $\vartheta_v$, $\vartheta_z$ et en ce que la grandeur x inclut, en outre, un décalage de température $\vartheta_F$ provoqué par une énergie extérieure, conformément à la relation suivante :

$$x' = \vartheta_z - \vartheta_a \mp \vartheta_F$$

**3.** Procédé selon la revendication 2, caractérisé en ce que les grandeurs $\alpha$, $\vartheta_F$ et k sont déterminées à partir des équations suivantes :

$$\frac{y_n + y_{n+1}}{y_n - y_{n+1}}(x_n - x_{n+1})\alpha + 2\vartheta_F = x_n + x_{n+1}$$

$$\overline{\ln K} = \frac{1}{n}\left[\sum_n \ln y_n - \alpha \sum_n \ln(x_n - \vartheta_F)\right],$$

avec n = 1, 2, 3, ..., c'est-à-dire des mesures à des instants différents.

**4.** Procédé selon la revendication 1, caractérisé en ce qu'aussi bien le coefficient k que l'exposant a sont déterminés plusieurs fois à partir de plusieurs triplets de valeurs de mesure $\vartheta_a$, $\vartheta_v$, $\vartheta_z$ et leur moyenne est ensuite formée.

**5.** Procédé selon les revendications 1 et 4, caractérisé en ce que l'exposant a est calculé conformément à la relation suivante :

$$\alpha = \frac{\ln \dfrac{y_1}{y_2}}{\ln \dfrac{x_1}{x_2}}$$

et le coefficient k est calculé conformément à la relation suivante :

$$k = \sqrt{\frac{y_1 \cdot y_2}{(x_1 \cdot x_2)^\alpha}}$$

$x_1$, $y_1$ et $x_2$, $y_2$ étant prédéterminés au moyen de deux triplets de valeurs de mesure $\vartheta_a$, $\vartheta_v$, $\vartheta_z$.

**6.** Procédé selon la revendication 4, caractérisé en ce qu'on ne tient pas compte de valeurs de $\alpha < 0,6$.

**7.** Procédé selon la revendication 1, caractérisé en ce que l'exposant $\alpha$ est calculé conformément à la relation suivante :

$$\alpha = \frac{x_1 + x_2}{x_1 - x_2} \qquad \frac{y_1 - y_2}{y_1 + y_2}$$

et le coefficient k est calculé conformément à la relation suivante :

$$k = \frac{y_1 + y_2}{2(\frac{x_1 + x_2}{2})^\alpha}$$

$x_1$, $y_1$ et $x_2$, $y_2$ étant prédéterminés au moyen de deux triplets de valeurs de mesure.

**8.** Procédé selon la revendication 7, caractérisé en ce que les différences de valeurs de mesure entre $x_1$, $x_2$ ne diffèrent pas de plus de 5 K.

Fig. 1

Fig. 2